Europäisches Patentamt

European Patent Office

Office européen des brevets

(19)

(11) Numéro de publication : **0 109 556 B1**

(12) **FASCICULE DE BREVET EUROPÉEN**

(45) Date de publication du fascicule du brevet :
09.09.87

(51) Int. Cl.⁴ : **F 16 G 5/16**

(21) Numéro de dépôt : 83110463.3

(22) Date de dépôt : 20.10.83

(54) Cavaliers pour courroie de transmission trapézoïdale.

(30) Priorité : 18.11.82 FR 8219480

(43) Date de publication de la demande :
30.05.84 Bulletin 84/22

(45) Mention de la délivrance du brevet :
09.09.87 Bulletin 87/37

(84) Etats contractants désignés :
AT BE CH DE GB IT LI LU NL SE

(56) Documents cités :
EP-A- 0 047 587
WO-A-80 /020 60
DE-A- 2 716 785
FR-E- 84 480
GB-A- 839 801
GB-A- 2 030 263
GB-A- 2 071 806
US-A- 2 555 190
US-A- 3 720 113

(73) Titulaire : MICHELIN & CIE (Compagnie Générale des
Etablissements Michelin) Société dite:
4 rue du Terrail
F-63000 Clermont-Ferrand (FR)

(72) Inventeur : Schneider, André
Schutzenstrasse 3
CH-8304 Wallisellen (CH)

(74) Mandataire : Renaudie, Jacques et al
Michelin & Cie Service K. Brevets
F-63040 Clermont-Ferrand Cédex (FR)

Jouve, 18, rue St-Denis, 75001 Paris, France

## Description

L'invention concerne les courroies de transmission dont la section a un contour extérieur sensiblement trapézoïdal et qui sont constituées essentiellement, d'une part d'au moins une âme flexible fermée sur elle-même, peu extensible dans le sens longitudinal de la courroie, éventuellement dotée d'un renforcement intérieur, d'autre part d'un ensemble de cavaliers peu compressibles dans le sens longitudinal de la courroie et montés sur cette âme.

De telles courroies sont susceptibles d'être utilisées à sec, par exemple dans certains variateurs de vitesse par écartement de poulies à joues coniques. Dans ces variateurs, le couple moteur est transmis essentiellement par compression des cavaliers les uns contre les autres le long de l'âme annulaire aplatie comme exposé par le brevet US-3-720 113 comprenant les caractéristiques du préambule de la revendication 1. Un glissement longitudinal apparaît entre l'âme et les cavaliers. Pour permettre ce mouvement, on ménage un certain jeu entre l'âme et les cavaliers. La face intérieure de l'âme reste fréquemment au contact des cavaliers, notamment dans les zones où la courroie est prise entre les joues des poulies. Ces jeux permettent notamment un mouvement de va-et-vient transversal de l'âme par rapport aux cavaliers. Ces mouvements relatifs provoquent des frottements, des échauffements et des usures des parties de l'âme prenant contact avec les cavaliers.

La technique de fabrication de l'âme (qui est une courroie plate) permet de minimiser l'usure de la face intérieure de l'âme. Mais la protection des rives entraîne un traitement individuel de chaque âme, par exemple en enrobant celle-ci d'un tissu protecteur adhérant à l'âme.

Dans la demande de brevet FR-A-2 527 723 publiée le 2.12.1983, on propose de supprimer la protection individuelle des rives de l'âme de la fabrication de celle-ci en évitant le mouvement relatif de va-et-vient de l'âme à l'intérieur des cavaliers, ce mouvement étant la cause majeure de l'usure des deux faces latérales ou rives de l'âme. Ceci en prévoyant sur au moins une des faces (intérieure ou extérieure) de l'âme au moins une nervure longitudinale logée en permanence dans une découpure correspondante de chaque cavalier.

L'expérience montre que dans le cas de l'utilisation d'une âme de l'espèce décrite ci-dessus, la ou les nervures longitudinales constituent une augmentation locale de l'épaisseur, donc du moment d'inertie de flexion et des déformations des faces interne et externe, augmentation causant, en outre, des échauffements indésirables de l'âme, dans le cas où celle-ci comporte un ou plusieurs matériaux hystérétiques.

L'invention a pour but d'améliorer encore l'endurance de l'âme en augmentant la flexibilité de celle-ci tout en diminuant sa perte hystérétique.

La solution à ce problème est une courroie de transmission telle qu'elle est caractérisée dans la revendication principale 1.

Ainsi la découpure de l'âme et la protubérance correspondante des cavaliers conformes à l'invention assurent un guidage transversal évitant les mouvements de va-et-vient transversaux réciproques et, par suite, les contacts nuisibles entre ces cavaliers et les rives de l'âme.

Ladite découpure conforme à l'invention consiste essentiellement en une rainure longitudinale continue, disposée dans la masse de l'âme et ouverte soit uniquement sur une seule face (intérieure ou extérieure) de l'âme, soit simultanément sur une face et une rive de l'âme.

Elle est également disposée de préférence dans la face intérieure de l'âme. On facilite ainsi la réalisation et la disposition de la protubérance des cavaliers devant être logée dans ladite découpure.

Avantageusement l'âme de courroie conforme à l'invention comporte un renforcement longitudinal (fils, câbles, filaments ou fibres) concourant à son inextensibilité et disposé le plus près possible de la face intérieure de l'âme et/ou un renforcement transversal concourant à son raidissement transversal et disposé le plus près possible de la face extérieure de l'âme.

Une autre variante préférentielle de l'invention consiste à interrompre le renforcement longitudinal dans la zone de la découpure de l'âme. Ceci permet de minimiser localement l'épaisseur de l'âme et d'augmenter l'efficacité du guidage conforme à l'invention.

L'invention est avantageusement combinée avec une des dispositions suivantes. Celles-ci d'une part diminuent encore les frottements destructeurs et, par suite les échauffements, des éléments en mouvement relatif, d'autre part atténuent le bruit, mais premettent aussi, en ce qui concerne les deux dernières, de séparer, en outre, la fonction de guidage transversal de la fonction de transmission du mouvement des cavaliers.

Dans une première combinaison, l'âme et les cavaliers sont, pour l'essentiel, en un matériau caoutchouteux ou plastique armé ou non, la protubérance des cavaliers logée dans la découpure de l'âme est en un métal au moins le long de la surface de la protubérance en contact avec la découpure, la découpure de l'âme, au moins dans sa partie en contact avec la protubérance des cavaliers, est en un matériau plastique ou caoutchouteux à résistances élevées contre la compression et l'usure au contact du métal de la protubérance des cavaliers.

Dans la seconde combinaison, l'âme est, pour l'essentiel, en un matériau caoutchouteux ou plastique armé ou non, les cavaliers sont, pour l'essentiel, en un métal, la découpure de l'âme est, au moins dans sa partie en contact avec la protubérance des cavaliers, en un matériau plastique ou caoutchouteux à résistances élevées contre la compression et l'usure au contact du métal des cavaliers, les faces extérieures des cavaliers sont, au moins dans leurs parties en contact avec les joues de poulie, en un matériau plastique ou caoutchouteux à résistances élevées contre la compression et l'usure au contact du métal des joues de poulies.

Dans la troisième combinaison, l'âme est, pour l'essentiel, en un matériau caoutchouteux ou plastique, armé ou non, les cavaliers sont formés de deux éléments consécutifs dans le sens longitudinal immobilisés l'un par rapport à l'autre dans le sens transversal de la courroie, le premier élément est en retrait par rapport à l'âme, a ses faces extérieures en contact avec les joues de poulie, et, au moins en ce qui concerne ces faces extérieures, est en un matériau caoutchouteux ou plastique à résistances élevées contre la compression et l'usure au contact du métal des joues de poulies, le second élément est en retrait par rapport aux joues de poulie, comporte la protubérance logée dans la découpure de l'âme et, au moins en ce qui concerne cette protubérance, est en métal, et la découpure de l'âme, au moins dans sa partie en contact avec la protubérance du second élément des cavaliers, est en un matériau caoutchouteux ou plastique à résistances élevées contre la compression et l'usure au contact du métal du second élément.

Dans une quatrième combinaison, variante de la précédente, le premier élément des cavaliers est réalisé en ledit matériau à résistances élevées à la compression et à l'usure au contact du métal formant les joues de poulie, le second élément est réalisé en métal et la découpure de l'âme en un matériau plastique ou caoutchouteux à résistances élevées contre la compression et l'usure au contact du métal du second élément.

De préférence ces cavaliers sont disposés les uns à la suite des autres sur l'âme de façon que lesdits premiers éléments alternent avec lesdits seconds éléments.

Des exemples d'exécution de l'invention sont décrits dans la suite de la description se référant aux figures du dessin.

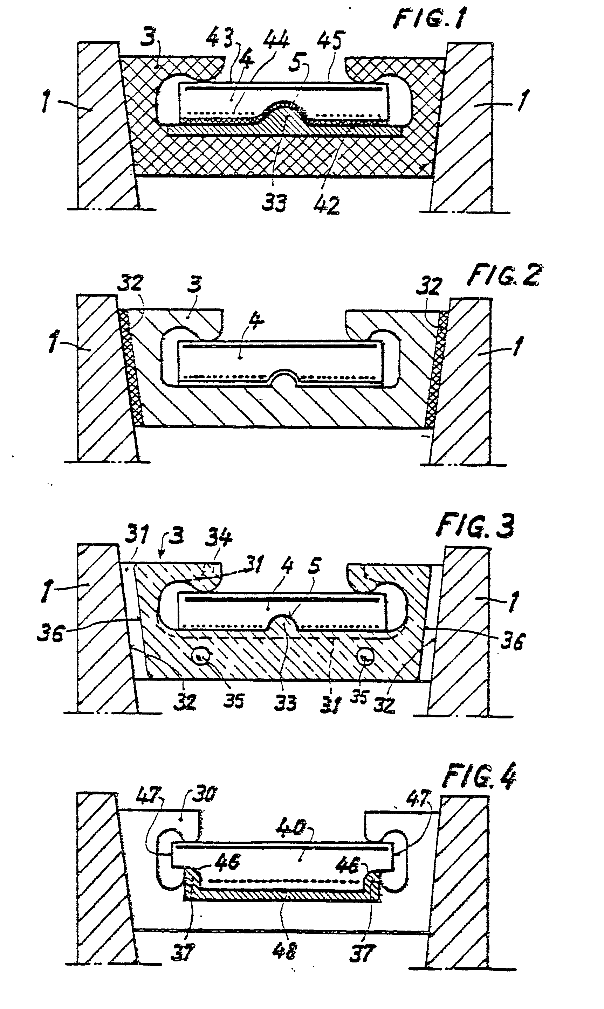

La courroie vue en coupe transversale sur la figure 1 est essentiellement constituée d'une part d'une âme 4 rendue pratiquement inextensible longitudinalement par une nappe de fils longitudinaux (renforcement longitudinal) 44. Ladite courroie est constituée d'autre part par un ensemble de cavaliers tel que 3. La face intérieure 42 de l'âme 4 est en contact avec le cavalier 3 et comporte selon l'invention une rainure 5 longitudinale disposée dans la masse de l'âme 4 et ouverte sur la face intérieure 42. Selon l'invention, le cavalier 3 comporte intérieurement une protubérance 33 en métal dont la surface en contact avec l'âme 4 épouse le profil transversal de la rainure 5.

L'extérieur de l'âme 4 selon l'invention, et notamment de la rainure 5 en contact avec la protubérance métallique 33 (acier) du cavalier 3 sont par exemple en tissu en polyamide, matériaux dont les résistances à la compression et à l'usure au contact de la protubérance 33 sont élevées. Quant au cavalier 3, il est par exemple en polyester ou polyamide, matériaux dont les résistances à la compression et à l'usure au contact du métal des joues de poulie 1 sont élevées.

Selon les dispositions préférentielles de l'invention, le renforcement longitudinal 44 est disposé aussi près que possible de la face intérieure 42 de l'âme et interrompu le long de la zone intéressée par la rainure 5 conforme à l'invention. Le renforcement transversal en fils transversaux 45 d'autre part est disposé aussi près que possible de la face extérieure 43 de l'âme.

L'extérieur de l'âme 4 de la courroie vue en coupe transversale sur la figure 2 est, comme dans le cas de la figure 1, en polyamide.

Le cavalier 3, par contre, est en métal, à l'exception de ses deux faces extérieures 32 en contact avec les joues 1 de poulie en métal, revêtues par exemple de polyamide ou polyester, matériaux dont les résistances à la compression et à l'usure au contact du métal sont élevées.

L'âme 4 de la courroie vue en coupe transversale sur la figure 3 est identique à celles des courroies des figures 1 et 2. Chaque cavalier 3 conforme à l'invention, par contre, est selon une disposition préférentielle formé de deux éléments 31, 34 immobilisés l'un par rapport à l'autre au moyen de deux proéminences 35. Comme montré en pointillé, le premier élément 31 est, sur la figure 3, disposé derrière le second élément 34. Le premier élément 31 est, conformément à ladite disposition préférentielle, en retrait par rapport à l'âme 4 et dépourvu de tout contact avec celle-ci. Il a ses faces extérieures 32 en contact avec les joues de poulie 1 en métal. Le premier élément 31 est en polyamide-imide, matériau à résistances élevées contre la compression et l'usure au contact dudit métal (acier). Le second élément 34 en métal (alliage léger) a ses faces extérieures 36 en retrait par rapport aux joues de poulie 1 et est dépourvu de tout contact avec celle-ci. Il comporte une protubérance 33 logée selon l'invention dans la rainure 5 de l'âme 4.

L'extérieur de l'âme 40 de la courroie vue en coupe transversale sur la figure 4 est, comme celles des courroies des figures 1 à 3 en tissu de polyamide. Cette âme 40 comporte selon l'invention deux découpures 46 ouvertes simultanément sur la face intérieure 48 et chacune sur une des rives 47 de l'âme 40. Elles (46) forment chacune un amincissement des rives 47 correspondantes. Ces deux découpures 46 constituent les logements pour les protubérances 37 en métal du cavalier 30.

## Revendications

1. Courroie de transmission dont la section a un contour extérieur sensiblement trapézoïdal, essentiellement constituée d'au moins une âme (4 ; 40) flexible et éventuellement hystérétique, fermée sur elle-même et à peu près inextensible dans le sens longitudinal de la courroie, comportant éventuellement un renforcement longitudinal (44) et/ou transversal (45), et d'un ensemble de cavaliers (3 ; 30) indépendants peu compressibles dans le sens longitudinal de la courroie et montés avec un jeu permettant le glissement longitudinal sur cette âme, caractérisée en ce qu'au moins une des faces (intérieure (42) ou extérieure (43)) de l'âme vue en section transversale comporte au moins une découpure de guidage, continue dans le sens longitudinal de la courroie, en ce qu'au moins une partie des cavaliers comporte une protubérance (33 ; 37) de forme correspondante logée en permanence dans ladite découpure de sorte que ladite découpure et ladite protubérance (33 ; 37) coopèrent pour assurer un guidage transversal des cavaliers (3 ; 30) sur l'âme (4 ; 40).

2. Courroie selon la revendication 1, caractérisée en ce que la découpure est une rainure (5) longitudinale continue disposée dans la masse de l'âme (4) et ouverte uniquement sur une seule face (intérieure (42) ou extérieure (43)) de l'âme (4).

3. Courroie selon la revendication 1, caractérisée en ce que la découpure est une rainure (46) longitudinale continue, disposée dans la masse de l'âme (40) et ouverte simultanément sur une face (48) et une rive (47) de l'âme (40).

4. Courroie selon l'une des revendications 1 à 3, caractérisée en ce que la découpure est disposée dans la face intérieure (42) de l'âme (4 ; 40).

5. Courroie selon l'une des revendications 1 à 4, caractérisée en ce que le renforcement transversal (45) est disposé le plus près possible de la face extérieure (43) de l'âme.

6. Courroie selon l'une des revendications 1 à 5, caractérisée en ce que le renforcement longitudinal (44) est disposé le plus près possible de la face intérieure (42) de l'âme.

7. Courroie selon la revendication 6, caractérisée en ce que le renforcement longitudinal (44) est interrompu dans la zone de la découpure.

8. Courroie selon la revendication 3, caractérisée en ce que l'âme (40) comporte deux découpures formant chacune un amincissement de la rive (47) correspondante de l'âme.

9. Courroie selon l'une des revendications 1 à 8, caractérisée en ce que l'âme (4 ; 40) et les cavaliers (3 ; 30) sont, pour l'essentiel, en un matériau caoutchouteux ou plastique, armé ou non, la protubérance (33 ; 37) des cavaliers logée dans la découpure de l'âme est en un métal au moins le long de la surface de la protubérance en contact avec la découpure, de l'âme (4 ; 40), au moins dans sa partie en contact avec la protubérance (33 ; 37) des cavaliers (3 ; 30), est en un matériau plastique ou caoutchouteux à résistances élevées contre la compression et l'usure au contact du métal de la protubérance des cavaliers.

10. Courroie selon l'une des revendications 1 à 8, caractérisée en ce que l'âme (4 ; 40) est, pour l'essentiel, en un matériau caoutchouteux ou plastique armé ou non, les cavaliers (3 ; 30) sont, pour l'essentiel, en un métal, la découpure de l'âme (4 ; 40) est, au moins dans sa partie en contact avec la protubérance (33 ; 37) des cavaliers (3 ; 30), en un matériau plastique ou caoutchouteux à résistances élevées contre la compression et l'usure au contact du métal des cavaliers, les faces extérieures (32) des cavaliers sont, au moins dans leurs parties en contact avec les joues de poulie (1), en un matériau plastique ou caoutchouteux à résistances élevées contre la compression et l'usure au contact du métal des joues de poulie.

11. Courroie selon l'une des revendications 1 à 8, caractérisée en ce que l'âme (4) est, pour l'essentiel, en un matériau caoutchouteux ou plastique, armé ou non, les cavaliers (3) sont formés de deux éléments consécutifs (31) et (34) dans le sens longitudinal, immobilisés l'un par rapport à l'autre dans le sens transversal de la courroie, le premier élément (31) est en retrait par rapport à l'âme, a ses faces extérieures en contact avec les joues de poulie, et, au moins en ce qui concerne ces faces extérieures, est en un matériau caoutchouteux ou plastique à résistances élevées contre la compression et l'usure au contact du métal des joues de poulie, le second (34) élément est en retrait par rapport aux joues de poulie (1) comporte la protubérance (33) logée dans la découpure de l'âme (4) et, au moins en ce qui concerne cette protubérance (33), est en métal, et la découpure de l'âme, au moins dans sa partie en contact avec la protubérance (33) du second élément (34) des cavaliers (3), est en un matériau caoutchouteux ou plastique à résistances élevées contre la compression et l'usure au contact du métal du second élément.

12. Courroie selon la revendication 11, caractérisée en ce que le premier élément (31) est réalisé en ledit matériau à résistances élevées à la compression et à l'usure au contact du métal formant les joues de poulie (1), le second élément (34) est réalisé en métal et la découpure de l'âme (4) en un matériau plastique ou caoutchouteux à résistances élevées contre la compression et l'usure au contact du métal du second élément.

13. Courroie selon l'une des revendications 11 ou 12, caractérisée en ce que les cavaliers (3) sont disposés les uns à la suite des autres sur l'âme (4) de façon que lesdits premiers éléments (31) alternent avec lesdits seconds éléments (34).

**Claims**

1. A drive belt, the cross-section of which has a substantially trapezoidal outer contour, formed essentially of at least one flexible possibly hysteretic core (4 ; 40), which is closed on itself and is substantially non-extendible in the longitudinal direction of the belt, optionally having a longitudinal (44) and/or transverse (45) reinforcement, and of an assembly of independent riders (3 ; 30) which are substantially noncompressible in the longitudinal direction of the belt and are mounted on the core with a clearance allowing longitudinal sliding along the core, characterized by the fact that at least one of the inner (42) or outer (43) faces of the core, seen in cross-section, has at least one continuous cutout in the longitudinal direction of the belt, by the fact that at least one portion of the riders has a protuberance (33 ; 37) of corresponding shape housed permanently within the cutout so that the cutout and protuberance (33 ; 37) cooperate to assure transverse guidance of the riders (3 ; 30) on the core (4 ; 40).

2. A belt according to claim 1, characterized by the fact that the cutout is a continuous longitudinal groove (5) arranged in the body of the core (4) and open only on a single inner (42) or outer (43) face of the core (4).

3. A belt according to claim 1, characterized by the fact that the cutout is a continuous longitudinal groove (46) arranged in the body of the core (40) and open simultaneously on one face (48) and one side (47) of the core (40).

4. A belt according to one of the claims 1 to 3, characterizd by the fact that the cutout is arranged in the inner (42) face of the core (4 ; 40).

5. A belt according to one of the claims 1 to 4, characterized by the fact that the transverse (45) reinforcement is arranged as close as possible to the outer (43) face of the core.

6. A belt according to one of the claims 1 to 5, characterized by the fact that the longitudinal (44) reinforcement is arranged as close as possible to the inner (42) face of the core.

7. A belt according to claim 6, characterized by the fact that the longitudinal (44) reinforcement is interrupted in the region of the cutout.

8. A belt according to claim 3, characterized by the fact that the core (40) has two cutouts each producing a thinning of the corresponding side (47) of the core.

9. A belt according to one of the claims 1 to 8, characterized by the fact that the core (4 ; 40) and the riders (3 ; 30) are formed essentially of a reinforced or nonreinforced rubber-like or plastic material ; the protuberance (33 ; 37) of the riders which is housed within the cutout in the core is formed of a metal, at least along the surface of the protuberance in contact with the cutout ; and the cutout in the core (4 ; 40), at least in the portion thereof in contact with the protuberance (33 ; 37) of the riders (3 ; 30), is formed of a rubber-like or plastic material of high resistance to compression and wear in contact with the metal of the protuberance of the riders.

10. A belt according to one of the claims 1 to 8, characterized by the fact that the core (4 ; 40) is formed essentially of a reinforced or nonreinforced rubber-like or plastic material ; the riders (3 ; 30) are formed essentially of a metal ; the cutout in the core (4 ; 40), at least in the portion thereof in contact with the protuberance (33 ; 37) of the riders (3 ; 30), formed of a rubberlike or plastic material of high resistance to compression and wear in contact with the metal of the riders ; and the outer (32) faces of the riders, at least in the portions thereof in contact with pulley flanges (1), are formed of a rubber-like or plastic material of high resistance to compression and wear in contact with metal of the pulley flanges.

11. A belt according to one of the claims 1 to 8, characterized by the fact that the core (4) is formed essentially of a reinforced or nonreinforced rubber-like or plastic material ; the riders (3) are formed of two consecutive elements (31) and (34) arranged one behind the other in the longitudinal direction, locked with respect to each other in the transverse direction of the belt ; the first element (31) is spaced from the core, has its outer faces in contact with pulley flanges, and, at least with respect to these outer faces, is formed of a rubber-like or plastic material of high resistance to compression and wear in contact with metal of the pulley flanges ; the second element (34) is spaced from the pulley flanges (1), has the protuberance (33) housed within the cutout of the core (4) and, at least with respect to this protuberance (33), is formed of a metal ; and the cutout in the core, at least in the portion thereof in contact with the protuberance of the second element (34) of the riders (3), is formed of a rubber-like or plastic material of high resistance to compression and wear in contact with the metal of the second element.

12. A belt according to claim 11, characterized by the fact that the first element 31 is formed of a rubber-like or plastic material of high resistance to compression and wear in contact with the metal of the pulley flanges (1) ; the second element (34) is formed of a metal ; and the cutout in the core (4) is formed of a rubber-like or plastic material of high resistance to compression and wear in contact with the metal of the second element.

13. A belt according to claim 11 or 12, characterized by the fact that the riders (3) are arranged one behind the other on the core (4) in such a manner that the first elements (31) alternate with the second elements (34).


**Patentansprüche**

1. Transmissionsriemen, dessen Querschnitt eine angenäherte Trapezform aufweist und im wesentlichen aus mindestens einer flexiblen, gegebenenfalls hysteresebehafteten, in sich geschlossenen und in Längsrichtung des Riemens nahezu undehnbaren Seele (4, 40), die gegebenenfalls eine Längsverstärkung (44) und/oder Querverstärkung (45) aufweist und einer Gesamtheit von unabhängigen Reitern (3, 30), die in Längsrichtung des Riemens wenig kompressibel sind und mit Spiel, daß es erlaubt, in Längsrichtung auf der Seele zu gleiten, angeordnet sind, dadurch gekennzeichnet, daß zumindestens eine der Seiten (Innenseite 42 oder Außenseite 43) der Seele im Querschnitt mindestens eine, in Längsrichtung des Riemens kontinuierliche Führungsausnehmung aufweist, daß zumindest ein Teil der Reiter einen Vorsprung (33, 37) korrespondierender Form besitzt, der permanent in der genannten Ausnehmung so liegt, daß die Ausnehmung und der Vorsprung (33, 37) zusammenwirken, um eine Querführung der Reiter (3, 30) auf der Seele (4, 40) zu sichern.

2. Treibriemen nach Anspruch 1, dadurch gekennzeichnet, daß die Ausnehmung eine durchgehende Längsnut (5) im Fleisch der Seele (4) ist, die sich nur nach einer Seite (Innenseite 42 oder Außenseite 43) der Seele (4) öffnet.

3. Treibriemen nach Anspruch 1, dadurch gekennzeichnet, daß die Öffnung eine durchgehende Längsnut (46) ist, die im Fleisch der Seele (40) angeordnet ist und sich gleichzeitig, auf eine Seite (48) und eine Flanke (47) der Seele (40) öffnet.

4. Treibriemen nach einem der Ansprüche 1 bis 3, dadurch gekennzeichnet, daß die Ausnehmung an der Innenseite (42) der Seele (4, 40) vorgesehen ist.

5. Treibriemen nach einem der Ansprüche 1 bis 4, dadurch gekennzeichnet, daß die Querverstärkung (45) so nahe als moglich an der Außenseite (43) der Seele angeordnet ist.

6. Treibriemen nach einem der Ansprüche 1 bis 5, dadurch gekennzeichnet, daß die Längsverstärkung (44) so nahe wie möglich an der Innenseite (42) der Seele angeordnet ist.

7. Treibriemen nach Anspruch 6, dadurch gekennzeichnet, daß die Längsverstärkung (44) im Bereich der Ausnehmung unterbrochen ist.

8. Treibriemen nach Anspruch 3, dadurch gekennzeichnet, daß die Seele (40) zwei Ausnehmungen aufweist, die jede eine Verdünnung der entsprechenden Flanke (47) der Seele bildet.

9. Treibriemen nach einem der Ansprüche 1 bis 8, dadurch gekennzeichnet, daß die Seele (4, 40) und die Reiter (3, 30) im wesentlichen aus kautschuk oder Kunststoffmaterial, armiert oder nicht, bestehen, daß der Vorsprung (33, 37) der Reiter, der in der Ausnehmung der Seele zu liegen kommt, aus einem Metall zumindest in dem Bereich der Oberfläche der Vorsprunges besteht, der in Kontakt mit der Ausnehmung ist, und daß die Ausnehmung der Seele (4, 40) zumindest dem Teil, der in Kontakt mit dem Vorsprung (33, 37) der Reiter (3, 30) kommt, aus einem Kunststoff oder Kautschukmaterial besteht, welches erhöhte Widerstandskraft gegen die Kompression und Abnutzung beim Kontakt mit dem Metall des Vorsprunges des Reiter aufweist.

10. Treibriemen nach einem der Ansprüche 1 bis 8, dadurch gekennzeichnet, daß die Seele (4, 40) im wesentlichen aus einem Kautschuk oder Kunststoffmaterial, armiert oder nicht ist, daß die Reiter (3, 30) im wesentlichen aus einem Metall bestehen, daß der Ausschnitt der Seele (4, 40) zumindest in dem Teil, der in Kontakt mit dem Vorsprung (33, 37) der Reiter (3, 30) kommt, aus einem Kunststoff oder Kautschukmaterial besteht, welches erhöhte Widerstandskraft gegen die Kompression und Abnutzung in Kontakt mit dem Metall der Reiter aufweist, daß die Außenseiten (32) der Reiter zumindest in dem Teil, der in Kontakt mit den Flanken der Räder (1) kommt, aus einem Kunststoff oder Kautschukmaterial mit erhöhter Widerstandskraft gegen die Kompression und Abnutzung in Kontakt mit dem Metall der Räder aufweist.

11. Treibriemen nach einem der Ansprüche 1 bis 8, dadurch gekennzeichnet, daß die Seele (4) im wesentlichen aus einem Kautschuk oder Kunststoffmaterial armiert oder nicht steht, daß die Reiter (3) aus zwei aufeinanderfolgenden Elementen (31 und 34) in Längsrichtung bestehen, die zueinander quer zum Treibriemen fixiert sind, daß das erste Element (31) bezüglich der Seele zurückspringt, an seinen Außenseiten in Kontakt mit den Flanken der Räder ist und zumindest was diese Außenseiten betrifft, aus einem Kautschuk oder Kunststoffmaterial mit erhöhter Widerstandskraft gegen den Druck und die Abnutzung im Kontakt mit dem Metall der Flanken der Räder aufweist, daß das zweite Element (34) bezüglich der Flanken der Räder (1) zurückspringt,; den Vorsprung (33), der in die Ausnehmung der Seele (4) zu liegen kommt, trägt und zumindest soweit es diesen Vorsprung (33) betrifft, aus Metall ist, und daß die Ausnehmung der Seele zumindest in dem Teil, der in Kontakt mit dem Vorsprung (33) des zweiten Elementes (34) des Reiters gelangt, aus einem Kautschuk oder Kunststoffmaterial mit erhöhter Widerstandskraft gegen die Kompression und Abnutzung in Kontakt mit dem Metall des zweiten Elementes ist.

12. Treibriemen nach Anspruch 11, dadurch gekennzeichnet, daß das erste Element (31) aus dem genannten Material mit erhöhter Widerstandskraft gegen die Kompression und Abnutzung in Kontakt mit dem Metall, welches die Flanken der Räder (1) formt, ist, daß das zweite Element (34) aus Metall ist, und daß die Ausnehmung der Seele (4) aus einem Kunststoff oder Kautschukmaterial mit erhöhter Widerstandskraft gegen den Druck und die Abnutzung in Kontakt mit dem Metall des zweiten Elementes ist.

13. Treibriemen nach einem der Ansprüche 11 oder 12, dadurch gekennzeichnet, daß die Reiter (3) hintereinander auf der Seele (4) so angeordnet sind, daß die genannten ersten Elemente (31) mit den genannten zweiten Elementen (34) abwechseln.

FIG.1

FIG.2

FIG.3

FIG.4